# EUROPÄISCHE PATENTSCHRIFT

(11) **EP 1 101 090 B1**
(45) Veröffentlichungstag und Bekanntmachung des Hinweises auf die Patenterteilung: **15.10.2003**
(21) Anmeldenummer: 99940100.3
(22) Anmeldetag: 29.07.1999
(51) Int. Cl.: G01M 3/24, G01M 3/36, G01M 19/00, B07C 5/34

(54) **VERFAHREN ZUM PRÜFEN VON BEHÄLTERVERSCHLÜSSEN**
METHOD FOR MONITORING CLOSED CONTAINERS
PROCEDE DE CONTROLE DE FERMETURE DE RECIPIENTS

(30) Priorität: 29.07.1998 DE 19834185
(43) Veröffentlichungstag der Anmeldung: 23.05.2001
(73) Patentinhaber: HEUFT SYSTEMTECHNIK GMBH, 56659 Burgbrohl (DE)
(72) Erfinder: HEUFT, Bernhard, D-56659 Brugbrohl (DE)
(74) Vertreter: Gritschneder, Martin, Dipl.-Phys.
(86) Internationale Anmeldenummer: EP9905533
(87) Internationale Veröffentlichungsnummer: WO00006986

(56) Entgegenhaltungen:
- DE-A- 4 224 540
- DE-A- 19 646 685

## Beschreibung

Die Erfindung betrifft ein Verfahren zum Prüfen der Dichtigkeit und des ordnungsgemäßen Verschlusses einer Mehrzahl von Behältern, die auf einer Bahn befördert werden, wobei die Behälter in kurzen zeitlichen Abständen aufeinanderfolgen, wobei die Behälter durch Anbringen eines Verschlusses verschlossen werden und wobei ein vom Innendruck abhängendes Merkmal (=Innendruckmerkmal) der Behälter in zeitlichem Abstand nach dem Anbringen des Verschlusses gemessen wird.

Bei starren Behältern wie Glasflaschen handelt es sich bei dem Innendruckmerkmal typischerweise um die Schwingungsfrequenz der Verschlüsse, bei flexiblen Behältern, wie PET-Flaschen, dagegen um den Füllstand.

Starre Behälter, z.B. Beispiel Glasfaschen, die Fruchtsaft oder Bier enthalten, sind bisher durch Messung des Innendrucks auf Dichtigkeit geprüft worden. Diese Prüfung wurde etwa 5 Minuten nach dem Füllen und Verschließen durchgeführt. Bei Fruchtsäften, die heiß eingefüllt werden, bildet sich innerhalb dieser Zeitspanne durch Abkühlung ein Unterdruck, während sich bei Bier durch das freiwerdende CO₂ ein geringer Überdruck von 0,6 bis 1,5 bar aufbaut. Bei Fruchtsäften, die nach dem Verschließen in einem Pasteur erhitzt werden, baut sich ein höherer Druck auf. Es ist bekannt, diesen Druck durch Messung der Schwingungsfrequenz des Behälterverschlusses zu ermitteln (DE-A-40 04 965 und DE-A-196 46 685). Die Messungen sind mit einer großen Unsicherheit behaftet, da die gemessene Frequenz offensichtlich von weiteren Parametern beeinflußt wird, wozu auf die gleichzeitig eingereichte Patentanmeldung "Verfahren zum Prüfen von verschlossenen Behältern" (= DE-Patentanmeldung 198 34 218.7 und EP-A- 1 101 089) verwiesen wird.

Der Erfindung, wie sie in Anspruch 1 angegeben ist, liegt daher die Aufgabe zugrunde, bei einem Verfahren der eingangs genannten Art, die Zuverlässigkeit der Prüfung der Dichtigkeit oder des Verschlusses zu verbessern.

Aus dem ermittelten Wert des Innendrucks wird ein Kriterium für die Dichtigkeit oder die Ordnungsmäßigkeit des Verschlusses abgeleitet. Der Innendruck braucht dazu selbstverständlich nicht zahlenmäßig gemessen werden. Es genügt, eine Größe zu ermitteln, die für den Innendruck repräsentativ ist, oder auch nur festzustellen, ob diese Größe über oder unter einem empirisch ermittelten Schwellwert liegt.

Daß das Innendruckmerkmal der Behälter beim Anbringen der Verschlüsse erfaßt wird, bedeutet, daß diese Erfassung stattfindet, bevor der Innendruck ansteigt oder abfällt. Wird ein Parameter der Verschlüsse oder Behälter erfaßt, deren Kenntnis für die Messung des Innendruckmerkmals notwendig ist, so genügt es, diesen Parameter zu erfassen, solange eine Verfolgung des betreffenden Behälters und damit eine Zuordnung noch möglich ist.

Die Zeitspanne zwischen dem Anbringen der Verschlüsse und der Messung des Innendruckmerkmals kann so groß sein, daß eine Vielzahl von Behältern innerhalb dieser Zeitspanne auf der Fördereinrichtung befördert wird.

Bei CO₂-haltigen Getränken findet die Messung z.B. nach 10 Minuten statt. Bei Fruchtsäften, die pasteurisiert werden, kann das Innendruckmerkmal nach dem Pasteur gemessen werden.

Bei der Verfahrensalternative, bei der beim Anbringen der Verschlüsse an den Behältern das Innendruckmerkmal erfaßt wird, wird dieses Merkmal zweimal gemessen, nämlich das erste Mal beim Anbringen der Verschlüsse an den Behältern und das zweite Mal in dem erwähnten zeitlichen Abstand. Die erste Messung entspricht dann dem Innendruck Null, so daß dieser Wert im wesentlichen nur von den Eigenschaften des Verschlusses und/oder des Verschließkopfes (=Verschlußparameter) abhängt. Die Abweichung des bei der zweiten Messung erhaltenen Wertes von dem bei der ersten Messung erhaltenen Wert ist daher praktisch ausschließlich auf die Änderung des Innendrucks zurückzuführen, so daß die Messwertdifferenz unmittelbar und im allgemeinen sogar linear die Erhöhung oder Erniedrigung des Innendrucks anzeigt.

Werden dagegen beim Anbringen der Verschlüsse an den Behältern die Eigenschaften des Verschlusses und/oder des Verschließkopfes (= Verschlußparameter) erfaßt, so wird dann bei der späteren Messung des Innendruckmerkmals aus dem gemessenen Wert dieses Merkmals der Innendruck anhand von Erfahrungswerten, die in Wertetabellen für die Parameter gespeichert sind, ermittelt. Man hat dann sozusagen für jeden Verschließkopf und/oder zusätzlich für jeden Verschlußtyp einen eigenen Parametersatz und Schwellwert für die gemessene Frequenz bei starren Behältern bzw. des Füllstandes bei Kunststoffbehältern, mit denen die ermittelte Frequenz bzw. der ermittelte Füllstand verglichen werden. Der Einfluß der Eigenschaften des Verschlußrohlings oder aufgebrachten Verschlusses, z.B Materialstärke und Compound-Menge, und der Eigenschaften des Verschließkopfes, z.B. die Verschließkraft, auf die Schwingungsfrequenz des aufgebrachten Verschlusses, wird in der gleichzeitig eingereichten Patentanmeldung "Verfahren zum Prüfen von verschlossenen Behältern" (= DE-A-198 34 218.7 und EP-A-1 101 089) erläutert.

Durch die Markierung der Behälter wird eine dauerhafte Zuordnung des beim Anbringen der Verschlüsse erfaßten Wertes des Merkmals oder der anderen Parameter zu den einzelnen Behältern ermöglicht.

Die gemessenen Werte des Merkmals und die Parameter können mittels der Markierung unmittelbar an dem Behälter angebracht werden.

Eine andere Möglichkeit besteht darin, die Behälter mittels der Markierung durchzunumerieren und in einem Computer dann bei jeder Behälternummer das beim Anbringen des Verschlusses gemessene Innendruckmerkmal oder die erfaßten Verschlußparameter zu hinterlegen. Die Durchnumerierung kann periodisch erfolgen, da im großen und ganzen die Behälter der Reihe nach weiterbewegt werden oder aus dem Pasteur herauskommen. Falls die Behälter bereits fortlaufend oder periodisch numeriert sind, so kann diese Numerierung für die Zuordnung des erfaßten Wertes bzw. der Parameter zu den Behältern verwendet werden.

Bei starren Behältern wie Glasflaschen enthält die Markierung vorzugsweise jedoch nur eine Information über die Schwingungsfrequenz des Verschlusses, die bei der ersten Messung ermittelt wurde, wobei die erste Messung im allgemeinen unmittelbar nach dem Verschließen stattfindet. Wie erwähnt, hängt diese Schwingungsfrequenz in erster Linie vom Verschlußtyp und der Schließkraft des Verschließkopfs (=Verschlußparameter) ab. Bei der zweiten Messung, wenn sich z.B. in einer mit einem Kronkorken verschlossenen Bierflasche ein Überdruck aufgebaut hat, wird eine davon abweichende Frequenz gemessen, und zwar meistens eine höhere Frequenz. Die Frequenzerhöhung ist dabei ausschließlich auf den inzwischen aufgebauten Überdruck zurückzuführen. Bei der ersten Messung, die unmittelbar nach dem Aufdrücken des Kronkorkens durchgeführt wird, beträgt die Frequenz z.B. zwischen 7 und 8 kHz, wobei die Unterschiede zwischen den einzelnen Flaschen durch Abweichungen in der Stärke des Materials des Kronkorkens und der unterschiedlichen Schließkraft der Verschließköpfe (Verschlußparameter) bedingt sind. Nach 5 Minuten hat sich z.B. ein Überdruck von 1 bar aufgebaut, was dazu führt, daß bei der dann durchgeführten zweiten Messung eine um 0,7 kHz höhere Frequenz gemessen wird. Diese Frequenzerhöhung liegt innerhalb der Schwankungsbreite, die durch Unterschiede in den Verschlußparametern bedingt ist. Eine Frequenzmessung nur nach Aufbau des Innendrucks würde daher nicht eine zuverlässige Aussage über die Dichtigkeit des Flaschenverschlusses ermöglichen; man könnte nicht sicher zwischen Frequenzabweichungen unterscheiden, die durch Unterschiede der Verschlußparameter verursacht sind, und solchen, die auf die Erhöhung des Innendrucks zurückzuführen sind.

Die Markierung kann in Form eines Bar- oder Strichcodes erfolgen. In der Praxis kann diese Art der Markierung auf Schwierigkeiten stoßen, da dann auf dem Behälter oder dem Verschluß ein Strichcode angebracht werden müßte, was von den Verbrauchern bisweilen nicht akzeptiert würde. Auch mit UV-Tinte kann die Markierung aufgebracht werden. Die Markierung, d.h. die Zuordnung bestimmter erfaßter Größen zu den Behältern, kann durch Transponder erfolgen.

Statt mit dem Bar- oder Strichcode, mittels UV-Tinte oder Transponder kann man den Behälter oder den Verschluß auch magnetisch markieren. Dies kann einmal über das Material des Behälters oder Verschlusses, z.B. bei ferromagnetischem Material, oder durch die Verwendung eines magnetisierbaren Lackes ähnlich wie bei Computerdisketten erfolgen. Grundsätzlich besteht die Möglichkeit, analog oder digital zu verfahren, also über die Stärke des Magnetfeldes oder nur über die Richtung. Beide Verfahren lassen sich auch kombinieren.

Die magnetische Markierung kann nach drei verschiedene Verfahren erfolgen:
a) Analoge Verschlüsselung der Information
b) Analoge Verschlüsselung der Information mit Referenzmarkierung
c) Digitale Verschlüsselung der Information

Ein Nachteil der analogen Methode ist, daß man Effekte kontrollieren muß, die die Stärke der Magnetisierung beeinflussen. Dazu gehören z.B. die unvermeidlichen Schwankungen der Materialstärke und -zusammensetzung des Verschlusses. Dies läßt sich dadurch korrigieren, daß zunächst ein Schreibimpuls definierter Stärke auf den Deckel aufgeprägt wird und dieser ausgelesen wird. Aus der Höhe des Lesesignals kann dann auf die Magnetisierbarkeit des Deckels geschlossen werden. Aufgrund dieser Information wird dann die nötige Stärke des Schreibimpulses zur Informationsspeicherung berechnet. Eine andere Korrekturmöglichkeit besteht darin, die Magnetisierung gleichzeitig in mehreren Richtungen vorzunehmen. Beispielsweise in der Deckelebene und senkrecht dazu. Die Magnetisierung wird dann in allen drei Raumrichtungen wieder ausgelesen und aus der Magnetisierung in zwei der drei Richtungen wird die Magnetisierung in der Deckelebene z.B. im Mittelpunkt des Deckels errechnet. Die Information steckt dann im Winkel des Vektors der Gesamtmagnetfeldstärke über der Deckelebene. So ist keine Ausrichtung der Flasche notwendig ist. Die Effekte der Magnetisierbarkeit der einzelnen Deckel werden herausgerechnet.

Bei der analogen Verschlüsselung der Information sind ferner die Höhentoleranzen der Flaschen zu berücksichtigen.

Mögliche Maßnahmen:
Bei dem oben beschriebenen Verfahren, bei dem zunächst ein Schreibimpuls definierter Stärke auf den Verschluß aufgeprägt wird, wird zugleich die Höhentoleranz korrigiert. Höhentoleranzen der Flaschen und damit der Abstand des Verschlusses zum Schreib- bzw. Lesekopf lassen sich auch aktiv messen und in die Auswertung der Magnetfeldstärke integrieren. Schließlich kann auch noch der Abstand des Schreib -und Lesekopfes aktiv der Flaschenhöhe nachgeführt werden.
Diese Nachteile der analogen Methode lassen sich auch dadurch beheben, daß ein Referenzimpuls gleichbleibender Stärke auf den Verschluß aufgebracht wird. Dieser konstante Referenzimpuls wird dann zur Rekonstruktion der Information im variablen Schreibimpuls wieder verwendet. Damit sind gleichzeitig die oben beschriebenen Probleme gelöst.

Die digitale Methode hat naturgemäß eine besseres Signal-zu-Rauschverhältnis, da nur die Richtung des Magnetfeldes als Informationseinheit verwendet wird. Es müssen also unterschiedliche Bereiche des Deckels in verschiedenen Richtungen magnetisiert werden. Beispielsweise läßt sich der Verschluß orthogonal zur Deckelebene in unterschiedlichen Orientierungen magnetisieren. Einfache Muster für die Magnetisierung sind Streifen unterschiedlicher Polarität oder, um die Rotationssymmetrie zu bewahren, konzentrische Ringe unterschiedlicher Polarität.

Alle diese Methoden sind möglich. Sie unterscheiden sich nur in der Aufwendigkeit des Verfahrens, sowie in der erzielbaren Informationsmenge, die in die Markierung gepackt werden kann.

Letztendlich ist eine Steigerung der Informationsdichte auch durch eine Kombination des analogen und des digitalen Verfahrens möglich. Beispielsweise bringt man konzentrische Ringe unterschiedlicher Orientierung auf den Verschluß auf und diese dann noch in mehreren leicht voneinander zu unterscheidenden Stufen der Magnetfeldstärke. Jede zusätzliche Stufe erhöht dann die Anzahl der maximalen möglichen Informationsmenge (d.h. der unterschiedbaren Zustände).

Vorzugsweise erfolgt sowohl das Magnetisieren als auch das Auslesen der Verschlüsse richtungsunabhängig, d.h. das Muster der Magnetisierung ist rotationssymmetrisch zur Rotationsachse der Behälter, z.B. von Getränkeflaschen aus Glas mit Kronkorken oder Schraubverschluß. Man kann dazu den Verschluß, wie bereits erwähnt, in konzentrischen Ringen magnetisieren. Eine andere Möglichkeit ist, in der Richtung der Magnetisierung die Information zu speichern. Wegen der geforderten Richtungsunabhängigkeit oder Rotationssymmetrie steht dabei nur ein Winkelbereich von insgesamt 180° zur Verfügung.

Was die Konstruktion des Schreibkopfes betrifft, so ist zum Schreiben analoger Signale bereits eine stromdurchflossene Spule eventuell mit hochpermeablem Kern ausreichend. Die Stärke des analogen Signals wird durch den Spulenstrom geregelt. Eine Feldformung läßt sich durch geeignete Polschuhe des weichmagnetischen Kerns der Spule erzeugen. Soll die Rotationssymmetrie bewahrt werden, so ist es am einfachsten, den Magnetisierungsimpuls senkrecht zur Deckelebene aufzubringen. Die Information ist dann im Betrag und im Vorzeichen der Magnetisierung enthalten. Dazu ist die Spule als Schreibkopf über den vorbeilaufenden Behältern anzubringen und ein Stromimpuls entsprechender Stärke zu erzeugen, wenn sich ein Behälter unter dem Schreibkopf befindet.

Eine gleichzeitige Magnetisierung in mehreren Richtungen läßt sich durch Anbringung von zwei oder mehr Spulen, die gleichzeitig getriggert werden realisieren. Auch hier lassen sich natürlich Magnetfeldstärke und Magnetfeldform durch entsprechend geformte Polschuhe optimieren.

Magnetisierungsmuster in konzentrischen Ringen auf dem Verschluß lassen sich durch ineinandergeschachtelte Spulen realisieren, deren Stromrichtung und Stromstärke variabel sind.

Bereits das Magnetfeld eines stromdurchflossenen Drahtes reicht aus, um Elektronenspins des Verschlußmaterials auszurichten. Beispielsweise lassen sich also durch parallele stromdurchflossene Drähte Streifenmuster auf die Verschlüsse aufbringen. Muster von beispielsweise zehn Streifen lassen sich so erzeugen. Rotationssymmetrische Magnetisierungsmuster lassen sich entsprechend durch Drähte in Ringform erzeugen.

Durch Spitzen aus hochpermeablem Material lassen sich punktweise hohe Magnetfeldstärken erzeugen, die die Orientierung der Elektronenspins des Deckelmaterials lokal ausrichten können.

Der Lesekopf besteht je nach Komplexität der Muster aus einem oder mehreren Magnetfeldsensoren. Aus deren Ausgangssignalen wird durch eine Analysesoftware die Information wieder rekonstruiert. Für einfache Magnetisierungsmuster genügen Hall-Sensoren. Vorzugsweise werden magnetoresistive Sensoren verwendet, die wesentlich empfindlicher sind als Hall-Sensoren. Auch die wesentlich teureren SQUIDs oder die sogenannten GMRs (Giant Magnetic Resistivity Detektoren) sind natürlich einsetzbar, im allgemeinen reichen jedoch magnetoresistive Sensoren aus und liefern eine ausreichende Auflösung, um die Magnetisierungsmuster auch im Abstand von einigen Millimetern wieder auszulesen. Ihre Ausgangssignale liefern ortsaufgelöste Informationen über Betrag und Richtung des gemessenen Magnetfeldes.

Bei der Magnetisierung ferromagnetischer Werkstoffe ist die Abhängigkeit von der Vorgeschichte also die Hysterese zu beachten. Die im Material erzielbare magnetische Flußdichte B hängt nicht nur von der aufgeprägten äußeren Magnetfeldstärke Hₑₓₜ ab, sondern auch von der Vorgeschichte des Materials.

Es ist daher sowohl für das analoge als auch in eingeschränkter Form für das digitale Verfahren der Magnetisierung von Vorteil für alle Verschlüsse eine definierte Ausgangsmagnetisierung erzeugen, um die Reproduzierbarkeit der Schreibimpulse zu erhöhen. Das bedeutet, man braucht noch einen zusätzlichen Löschkopf, der dem Schreibkopf vorgelagert ist.

Als definierte Ausgangsmagnetisierung eignen sich zum einen eine Sättigungsmagnetisierung und zum anderen eine Entmagnetisierung der Verschlüsse. Sättigungsmagnetisierung erreicht man durch ein sehr starkes äußeres Magnetfeld. Entmagnetisierung läßt sich durch ein magnetischen Wechselfeld abnehmender Intensität erreichen, das man durch eine wechselstromdurchflossene Spule erzeugt. Wird der Behälterverschluß am Löschkopf vorbeigeführt, so erfährt er dabei automatisch ein abnehmendes Magnetfeld, auch wenn der Spulenstrom konstant ist. Zur Entmagnetisierung reicht daher ein Löschkopf aus, der in geringem Abstand über den unter ihm durchlaufenden Behälterverschlüssen angebracht ist und mit Wechselstrom konstanter Stärke gespeist wird. Der Durchmesser des Löschkopfes soll größer als der Durchmesser des zu entmagnetisierenden Verschlusses sein, um diesen vollflächig entmagnetisieren zu können.

Beim Schreiben selbst stellt sich eine ähnliche Problematik, wenn der Schreibkopf mit Spulen mit weichmagnetischen Spulenkernen arbeitet. Nach einem Schreibimpuls hoher Feldstärke kann man keinen Schreibimpuls gleicher Richtung erzeugen, der kleiner ist als die zum ersten Impuls gehörende Remanenz. Zur Lösung dieses Problems kann man folgende Maßnahmen ergreifen:
a) Nur den Bereich zwischen Remanenz und Sättigungsmagnetisierung als Dynamikbereich des Schreibkopfes nutzen.
b) Zwischen den Flaschen einen Löschimpuls für den Schreibkopf mittels Wechselstrom geben.
c) Nicht den Strom, sondern das Magnetfeld des Schreibimpulses vorgeben. Das Magnetfeld muß dann gemessen werden und die Ströme des Schreibkopfes entsprechend geregelt werden.

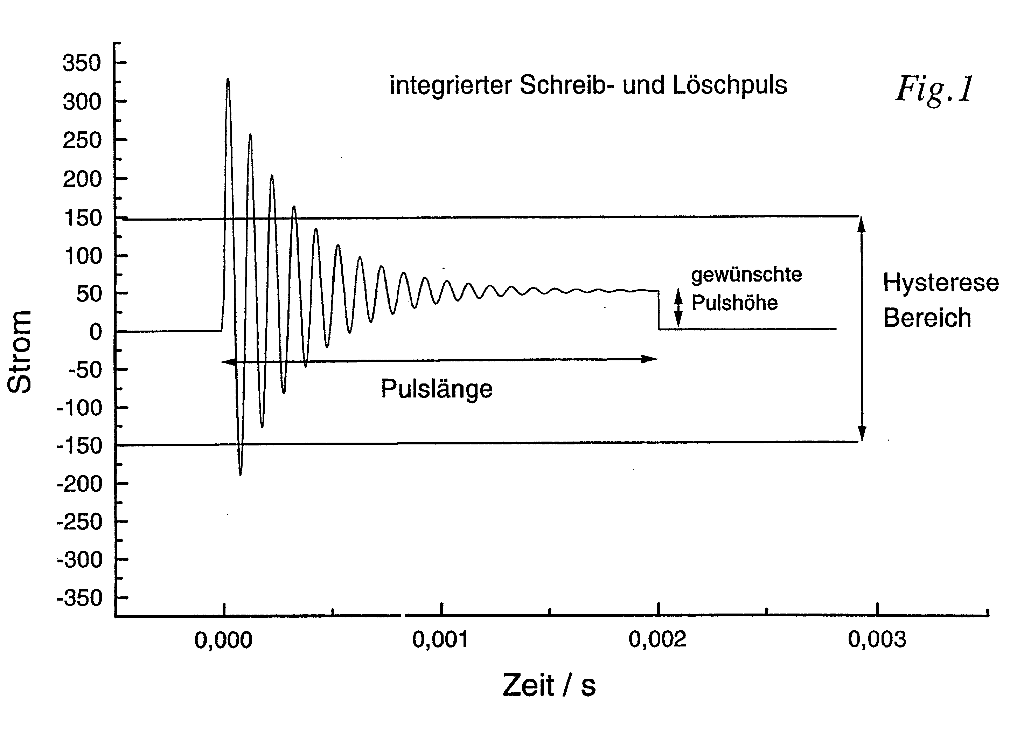

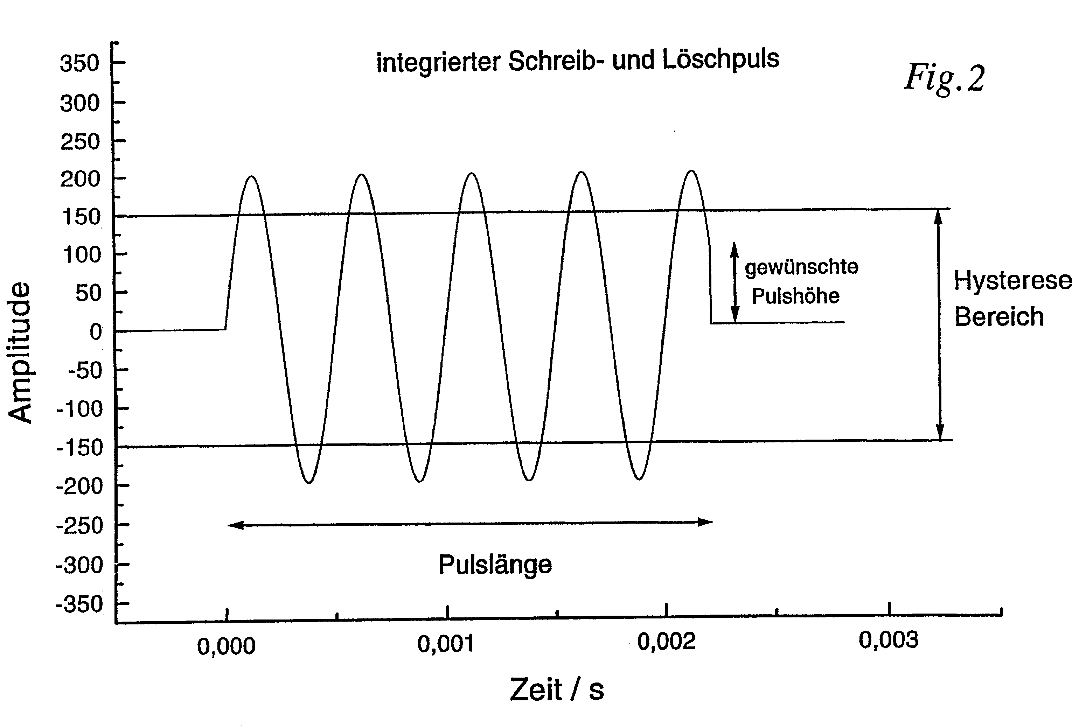

Das elegantere Verfahren ist natürlich den Schreibkopf und den Löschkopf in einem Kopf zu integrieren. Damit entmagnetisiert man gleichzeitig die Verschlüsse und den Schreibkopf. Dazu muß man nur einen geeigneten Schreibimpuls generieren. Wieder gibt es zwei Verfahren, die in der Zeichnung verdeutlicht sind:
a) Über den gewünschten Gleichspannungsimpuls wird ein hoher abnehmender Wechselstrom gelegt, der während der Impulsdauer auf Null zurückgeht (siehe Fig. 1).
b) Mittels eines hohen Wechselstroms wird die gesamte Hysteresekurve für jeden Verschluß (und das Spulenkernmaterial!) durchfahren. Bei der gewünschten Impulshöhe wird abgebrochen (siehe Fig. 2).

Das Kodieren oder Markieren der einzelnen Flaschen ist nicht nur für die Kontrolle der Dichtigkeit des Verschlusses von Glasflaschen, sondern auch zur Messung der Dichtigkeit von PET-Flaschen einsetzbar. Man mißt dazu den Füllstand unmittelbar nach dem Verschließen der PET-Flasche und dann zu einem späteren Zeitpunkt und aus dem Vergleich kann man dann sehr genau feststellen, ob die Flasche dicht ist. Normalerweise baut sich nach dem Verschließen der Druck auf, da CO₂ frei wird. Die PET-Flasche dehnt sich etwas aus und dadurch sinkt der scheinbare Füllstand um einen bestimmten Betrag. Ist die PET-Flasche im Bereich der flüssigen Phase undicht, so sinkt der Füllstand stärker. Ist das Leck dagegen im oberen Bereich, also wo sich die Luftblase befindet, so sinkt der Füllstand nicht. Bei Kunststoffflaschen kann daher durch den Vergleich des Füllstandes zu zwei auseinanderliegenden Zeitpunkten eine Undichtigkeit festgestellt werden.

Nachfolgend wird die Erfindung an Hand eines Ausführungsbeispiels näher erläutert, das sich auf die Prüfung der Dichtigkeit von Bierflaschen bezieht, die mit einem Kronkorken aus Stahl verschlossen werden. Die Flaschen werden in geringem Abstand oder sogar unter Staudruck auf einem Förderband mit einem Durchsatz von bis zu 80 000 Flaschen pro Stunde befördert.

Für die Prüfung der Dichtigkeit und des ordnungsgemäßen Verschlusses wird eine Einrichtung mit einer ersten Einrichtung zum Messen der Frequenz der mechanischen Schwingungen des Verschlusses, mit einem Löschkopf, mit einem Schreibkopf, mit einem Lesekopf und mit einer zweiten Einrichtung zum Messen der Frequenz der mechanischen Schwingungen des Verschlusses sowie der jeweils zugehörigen Elektronik verwendet:

Als erstes wird die Frequenz der mechanischen Schwingungen des Verschlusses einer gefüllten und auf einem Gliederkettenförderer zugeführten Flasche gemessen. Dies erfolgt in bekannter Weise, indem durch einen kurzen magnetischen Impuls der Verschluß angestoßen wird und dann durch ein Mikrofon die Frequenz der Schwingungen des Verschlusses aufgenommen wird. Diese Frequenz liegt im Bereich von z.B. 7 bis 8 kHz.

Der Verschluß wird dann mittels eines Löschkopfes entmagnetisiert. Als Löschkopf dient eine Spule mit weichmagnetischem Eisenkern, die mit einem Dauerwechselstrom einer Frequenz von etwa 100 Hz und einer Stromstärke von mehreren Ampere betrieben wird. Der Durchmesser der Spule beträgt 3 cm und ist damit etwas größer als der Durchmesser der zu beschreibenden Verschlüsse. Die Spule hat etwa 50 Windungen. Der Löschkopf löscht sämtliche vorhandene Signale auf dem Verschluß; entmagnetisiert also vollständig alle Verschlüsse der Flaschen, die in einem Abstand von 5 mm unter ihm hindurchgeführt werden.

Der Schreibkopf ist baugleiche zu dem Löschkopf und wird mit einem kurzen Gleichstromimpuls zwischen 1 und 10 Ampere gespeist, wenn sich der zu beschreibende Verschluß direkt unter ihm im Abstand von etwa 3 mm befindet. Der Schreibkopf richtet die Weißschen Bezirke des ferromagnetischen Materials senkrecht zur Verschlußebene aus und über die Stärke des Gleichstromimpulses kann man die verbleibende Magnetfeldstärke (Remanenz) des Verschlußmaterials steuern. Den richtigen Zeitpunkt für den Magnetisierungsimpuls bestimmt man durch eine Lichtschranke, die die Ankunft eines Behälters anzeigt.

Die Markierung der Verschlüsse erfolgt analog. Die Verschlüsse werden senkrecht zu ihrer Fläche magnetisiert. Flaschen, deren Verschlüsse eine Frequenz außerhalb des Bereichs von 7 bis 8 kHz haben, werden sofort ausgesondert, da sie offensichtlich defekt sind. Der Bereich von 7 bis 8 kHz wird in analoger Form durch die Stärke der aufgebrachten Magnetisierung wiedergegeben. Eine Frequenz von 7 kHz wird durch eine im Abstand von 3 mm vom Verschluß gemessene Feldstärke von 1 Gauß bei nach unten gerichtetem Magnetfeld und eine Frequenz von 8 kHz durch eine Feldstärke von 1 Gauß bei nach oben gerichtetem Magnetfeld wiedergegeben. Insgesamt steht daher für die Wiedergabe des Frequenzbereichs von 7 bis 8 kHz ein Bereich von 2 Gauß zur Verfügung. Der Zwischenbereich wird etwa linear interpoliert.

Die Flaschen laufen dann durch einen Etikettierer und nach 5 Minuten wird zunächst mittels des Lesekopfes die magnetisch verschlüsselte Information aus dem Verschluß ausgelesen. Durch einen induktiven Abstandsmesser wird auch die vertikale Position des Verschlusses und damit der Abstand zwischen Lesekopf und Verschluß gemessen.

Als Lesekopf dient in einachsiger, magnetoresistiver Sensor. Die Leseachse ist senkrecht zur Verschlußebene ausgerichtet, der Abstand zu den Verschlüssen beträgt etwa 5 mm und die Flaschen werden mit den Verschlüssen mittig unter dem Sensor durchgeführt. Die Ausgangssignale des Sensors von einigen mV müssen dann noch elektronisch aufbereitet und verstärkt werden. An dieser Stelle findet auch eine Korrektur der Unterschiede in der Höhe der einzelnen Flaschen statt, wozu das Signal des induktiven Abstandsmesser verarbeitet wird. Es werden dabei sowohl die sich beim Schreiben als auch die sich beim Lesen ergebenden Abweichungen der Stärke der Magnetisierung bzw. des ausgelesenen Signals korrigiert. Die übertragene Information steckt dann im maximalen Hub der Magnetfeldstärke des gerade gemessenen Verschlusses. Dieser Hub wird aus den Ausgangssignalen des Magnetsensors von der Auswertesoftware bestimmt und gibt die bei der ersten Frequenzmessung ermittelte Frequenz der mechanischen Schwingungen des Verschlusses an. Das Auslesen wird wiederum durch eine Lichtschranke getriggert.

Schließlich wird nochmals die aktuelle Frequenz der mechanischen Schwingungen des Verschlusses ermittelt. Bei dieser zweiten Messung wird das gleiche Verfahren wie bei der ersten Messung angewandt. Aus dem Unterschied der bei der ersten und bei der zweiten Messung erhaltenen Werte für die mechanischen Schwingungen des Verschlusses kann nun der sich zwischen beiden Messungen in der Flasche aufgebaute Druck bestimmt werden.

Während die Absolutwerte der Frequenzen sehr stark von den Verschlußparametern abhängen, wird der Frequenzunterschied davon nicht beeinflußt. Die mit dem Einschreiben und Auslesen der magnetischen Markierung verbundenen Fehler sind wesentlich kleiner als die Frequenzverschiebung durch die Verschlußparameter.

Zeigt der festgestellte Frequenzunterschied einen unzulässig kleinen Innendruck an, so ist die ein Anzeichen für einen undichten Verschluß und wird die betreffende Flasche ausgesondert.

## Patentansprüche

1. Verfahren zum Prüfen der Dichtigkeit oder des ordnungsgemäßen Verschlusses eines Behälters, der zusammen mit einer Vielzahl gleicher Behälter auf einer Bahn befördert wird, wobei die Behälter in kurzen zeitlichen Abständen aufeinanderfolgen, wobei die Behälter durch Anbringen eines Verschlusses verschlossen werden und wobei ein vom Innendruck abhängendes Innendruckmerkmal der Behälter in zeitlichem Abstand nach dem Anbringen des Verschlusses gemessen wird, **dadurch gekennzeichnet,**
- **daß** beim Anbringen der Verschlüsse an den Behältern
- das Innendruckmerkmal gemessen wird oder
- Parameter der Verschlüsse oder Behälter erfaßt werden, deren Kenntnis für die Ermittlung des Innendruckes aus der Messung des Innendruckmerkmals notwendig sind;
- **daß** die Behälter spätestens beim Anbringen des Verschlusses in einer Weise markiert werden, die eine Zuordnung der beim Anbringen der Verschlüsse erfaßten Werte zu dem jeweiligen Behälter zuläßt,
- **daß** der Innendruck des Behälters aus dem in zeitlichem Abstand nach dem Anbringen des Verschlusses gemessenen Wert des Innendruckmerkmals
- und Vergleich mit dem beim Anbringen des Verschlusses gemessenen Wert des Innendruckmerkmals bzw.
- unter Berücksichtigung der beim Anbringen des Verschlusses erfaßten Parameter
ermittelt wird, wobei die Zuordnung des beim Anbringen des Verschlusses gemessenen Innendruckmerkmals bzw. der beim Anbringen des Verschlusses erfaßten Parameter anhand der Markierung erfolgt.

2. Verfahren nach Anspruch 1, **dadurch gekennzeichnet, daß** die Messung des Innendruckmerkmals in einem zeitlichen Abstand zum Anbringen der Verschlüsse erfolgt, der so groß ist, daß eine Vielzahl von Behältern innerhalb dieser Zeitspanne an einer bestimmten Stelle der Bahn vorbeibefördert wird.

3. Verfahren nach Anspruch 1, wobei beim Anbringen der Verschlüsse das Innendruckmerkmal erfaßt wird, **dadurch gekennzeichnet, daß** die Markierung den für den jeweiligen Behälter erfaßten Wert des Innendruckmerkmals wiedergibt.

4. Verfahren man nach einem der Ansprüche 1 bis 3, **dadurch gekennzeichnet, daß** die Markierung in einer Magnetisierung des Verschlusses besteht.

5. Verfahren nach Anspruch 4, **dadurch gekennzeichnet, daß** die Magnetisierung des Verschlusses Daten in analoger Form enthält.

6. Verfahren nach einem der Ansprüche 1 bis 5, wobei die Behälter und die Verschlüsse aus starrem Material bestehen, **dadurch gekennzeichnet, daß** das Innendruckmerkmal die Schwingungsfrequenz der Verschlüsse ist und daß die Markierung die beim Anbringen der Verschlüsse erfaßte Schwingungsfrequenz wiedergibt.

7. Verfahren nach einem der Ansprüche 1 bis 5, wobei die Behälter aus flexiblem Material bestehen, **dadurch gekennzeichnet, daß** das Innendruckmerkmal der Füllstand ist und daß die Markierung den beim Anbringen der Verschlüsse erfaßten Füllstand wiedergibt.

## Claims

1. Method of testing the tightness or correct closure of a container which is transported on a conveyor, together with a plurality of identical containers, the containers succeeding each other at brief time intervals, the containers being sealed by the attachment of a closure and an internal-pressure characteristic of the containers dependent on the internal pressure being measured at a time interval after the attachment of the closure, **characterized in that**,
- during the attachment of the closures to the containers
- the internal-pressure characteristic is measured or
- parameters of the closures or containers are recorded, knowledge of which is necessary to ascertain the internal pressure from the measurement of the internal-pressure characteristic;
- the containers are marked, not later than when the closure is attached, in a way which permits the values which are recorded upon attachment of the closures to be allocated to the respective container,
- the internal pressure of the container is ascertained from the value of the internal-pressure characteristic measured at the time-interval after the attachment of the closure
- and comparison with the value of the internal-pressure characteristic measured upon attachment of the closure or, respectively,
- taking into account the parameters recorded upon attachment of the closure,
the allocation of the internal-pressure characteristic measured upon attachment of the closure or, respectively, of the parameters recorded upon attachment of the closure taking place by means of the marking.

2. Process according to claim 1, **characterized in that** the measurement of the internal-pressure characteristic takes place at a time interval relative to the attachment of the closure which is so great that a plurality of containers is conveyed past a specific point on the conveyor within this time span.

3. Process according to claim 1 in which, upon attachment of the closures, the internal-pressure characteristic is recorded, **characterized in that** the marking reproduces the value recorded for the respective container of the internal-pressure characteristic.

4. Process according to one of claims 1 to 3, **characterized in that** the marking consists of a magnetization of the closure.

5. Process according to claim 4, **characterized in that** the magnetization of the closure contains data in analog form.

6. Process according to one of claims 1 to 5 in which the containers and the closures consist of rigid material, **characterized in that** the internal-pressure characteristic is the oscillation frequency of the closures and the marking reproduces the oscillation frequency recorded upon attachment of the closures.

7. Process according to one of claims 1 to 5 in which the containers consist of flexible material, **characterized in that** the internal-pressure characteristic is the fill level and the marking reproduces the fill level recorded upon attachment of the closures.

## Revendications

1. Procédé de contrôle de l'étanchéité ou de la fermeture normale d'un récipient qui est transporté avec plusieurs récipients identiques sur une voie, les récipients se succédant à de brefs intervalles de temps, tandis que les récipients sont fermés au moyen de la pose d'une fermeture et qu'une caractéristique de pression intérieure des récipients, dépendant de la pression intérieure, est mesurée à un certain intervalle de temps après la pose de la fermeture, **caractérisé**
- **en ce que**, lors de la pose des fermetures sur les récipients,
- la caractéristique de pression intérieure est mesurée ou
- des paramètres des fermetures ou des récipients dont la connaissance est nécessaire pour déterminer la pression intérieure à partir de la mesure de la caractéristique de pression intérieure, sont détectés ;
- **en ce que** les récipients sont marqués au plus tard lors de la pose de la fermeture d'une manière qui autorise une association des valeurs détectées, lors de la pose des fermetures, au récipient respectif,
- **en ce que** la pression intérieure du récipient est déterminée à partir de la valeur de la caractéristique de pression intérieure mesurée à un certain intervalle de temps après la pose de la fermeture
- et comparaison avec la valeur de la caractéristique de pression intérieure mesurée lors de la pose de la fermeture ou
- en tenant compte des paramètres détectés lors de la pose de la fermeture,
tandis que l'association de la caractéristique de pression intérieure mesurée lors de la pose de la fermeture ou des paramètres détectés lors de la pose de la fermeture a lieu à l'aide du marquage.

2. Procédé suivant la revendication 1, **caractérisé en ce que** la mesure de la caractéristique de pression intérieure a lieu à un intervalle de temps vis-à-vis de la pose des fermetures qui est suffisamment grand pour que plusieurs récipients soient transportés dans les limites de cet intervalle de temps en passant devant un emplacement déterminé de la voie.

3. Procédé suivant la revendication 1, selon lequel la caractéristique de pression intérieure est détectée lors de la pose des fermetures, **caractérisé en ce que** le marquage reproduit la valeur de la caractéristique de pression intérieure qui est détectée pour le récipient chaque fois considéré.

4. Procédé suivant l'une des revendications 1 à 3, **caractérisé en ce que** le marquage consiste en une aimantation de la fermeture.

5. Procédé suivant la revendication 4, **caractérisé en ce que** l'aimantation de la fermeture contient des données sous forme analogique.

6. Procédé suivant l'une des revendications 1 à 5, selon lequel les récipients et les fermetures sont en une matière rigide, **caractérisé en ce que** la caractéristiques de pression intérieure est la fréquence de vibration des fermetures et **en ce que** le marquage reproduit la fréquence de vibration détectée lors de la pose des fermetures.

7. Procédé suivant l'une des revendications 1 à 5, selon lequel les récipients sont en une matière flexible, **caractérisé en ce que** la caractéristiques de pression intérieure est le niveau de remplissage et **en ce que** le marquage reproduit le niveau de remplissage détecté lors de la pose des fermetures.
